# EUROPEAN PATENT APPLICATION

(11) **EP 4 424 970 A1**
(43) Date of publication of application: **04.09.2024**
(21) Application number: 24159737.6
(22) Date of filing: 26.02.2024
(51) Int. Cl.: E06B 3/62, B29C 48/12, B29C 48/16

(54) **METHOD FOR MANUFACTURING GASKETS AND GASKET**

(30) Priority: 03.03.2023 IT 202300003858
(71) Applicant: Roverplastik S.P.A., 38060 Volano (TN) (IT)
(72) Inventor: GUARDINI, Aldo, 38122 TRENTO, FRAZIONE COGNOLA (IT); SINITO, Ester, 38100 TRENTO (IT); GRIGGIO, Natale, 35100 PADOVA (IT); MAULE, Nicola, 38060 VOLANO TN (IT)
(74) Representative: Modiano, Micaela Nadia

(57) **Abstract**

A method for manufacturing gaskets (1), characterized in that it comprises a step of coextrusion of a first material and of a second material in order to obtain a longitudinally extended profiled element (10) with a longitudinally extended first portion (11) made of the first material and a longitudinally extended second portion (12) stably connected to the longitudinally extended first portion (11) and made of the second material, the first portion defining a mating portion (13) and a substantially planar abutment portion (22), the first material having a first hardness and the second material having a second hardness which is lower than the first hardness, there being a step of mating the planar abutment portion (22) with a double-sided adhesive sheet-like element (30) having a first adhesive face (30a) designed to face the planar abutment portion (22) and a second adhesive face (23) covered with a removable film (24) arranged on the opposite side with respect to the planar abutment portion (22).

## Description

The present invention relates to a method for manufacturing gaskets and a gasket.

In particular, the gasket according to the invention is a gasket for door or window frames made of PVC and made of aluminum, wood or other materials.

With reference to door or window frames made of PVC, these are constituted by door leaf profiles which are fitted, typically at the edge of the glazing, with a sealing gasket of soft PVC which is extruded together with the rigid profile. Such a gasket has no function of bonding the glazing, of mechanically sealing or stiffening the door leaf.

In fact, the sole function of such a gasket is as a seal against atmospheric agents.

In door or window frames made of aluminum, on the other hand, the door leaf profiles, at the edge of the glazing, are fitted with a sealing gasket made of EPDM, or of thermoplastic materials in general, which is inserted, after the extruded profiles are manufactured, into a respective receptacle. In this case too the gasket has no function of bonding the glazing, of mechanically sealing or stiffening the door leaf, and its sole function is as a seal against atmospheric agents.

The aim of the present invention is to provide a method for manufacturing gaskets and a gasket which is capable of improving the known art in one or more of the above-mentioned aspects.

Within this aim, an object of the invention is to devise a method for manufacturing a gasket and a gasket that can be associated with a profile of a door or window frame and is capable of increasing the rigidity of the structure of the door or window frame.

Another object of the invention is to provide a method and a gasket that are highly reliable, easy to implement and of low cost.

This aim and these and other objects which will become better apparent hereinafter are achieved by a method for manufacturing gaskets and by a gasket according to the independent claims, optionally provided with one or more of the characteristics of the dependent claims.

Further characteristics and advantages of the invention will become better apparent from the detailed description that follows of a preferred, but not exclusive, embodiment of the method for manufacturing gaskets and of the gasket according to the invention, which are illustrated for the purposes of non-limiting example in the accompanying drawings wherein:

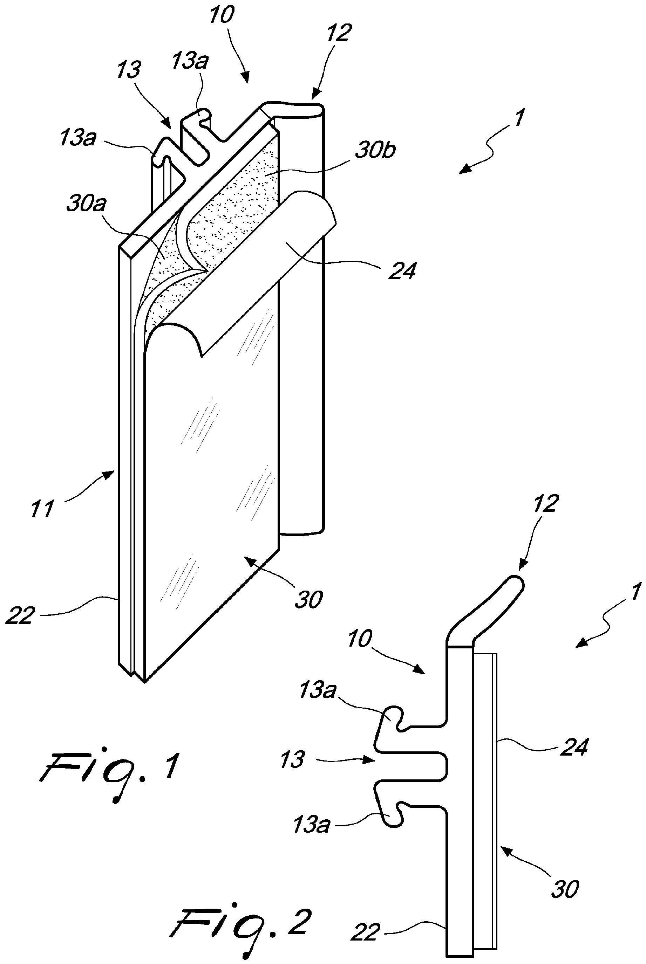

Figure 1 is a perspective view of a gasket according to the invention;
Figure 2 is a side view of the gasket of Figure 1;
Figure 3 is a partially cutaway perspective view of a door or window frame associated with a gasket according to the invention;
Figure 4 is a transverse cross-section of the portion of door or window frame shown in Figure 3.

With reference to the figures, the method according to the invention comprises a step of coextrusion of a first material and of a second material in order to obtain a longitudinally extended profiled element 10 with a longitudinally extended first portion 11 made of the first material and a longitudinally extended second portion 12 which is stably connected to the longitudinally extended first portion 11 and is made of the second material.

The first portion 11 defines a mating portion 13 and a substantially planar abutment portion 22.

The first material has a first hardness and the second material has a second hardness which is lower than the first hardness.

In particular, the first material is chosen from so-called semi-rigid or rigid materials, while the second material is chosen from so-called soft materials.

The method according to the invention entails a step of mating the planar abutment portion 22 with a double-sided adhesive sheet-like element 30 having a first adhesive face 30a designed to face the planar abutment portion 22 and a second adhesive face 30b covered with a removable film 24 arranged on the opposite side with respect to the planar abutment portion 22. According to a preferred practical embodiment, the first material has a Shore A hardness higher than 75, while the second material has a Shore A hardness lower than 70.

Obviously, according to the applications and to requirements, materials with a different hardness from those given above can be used.

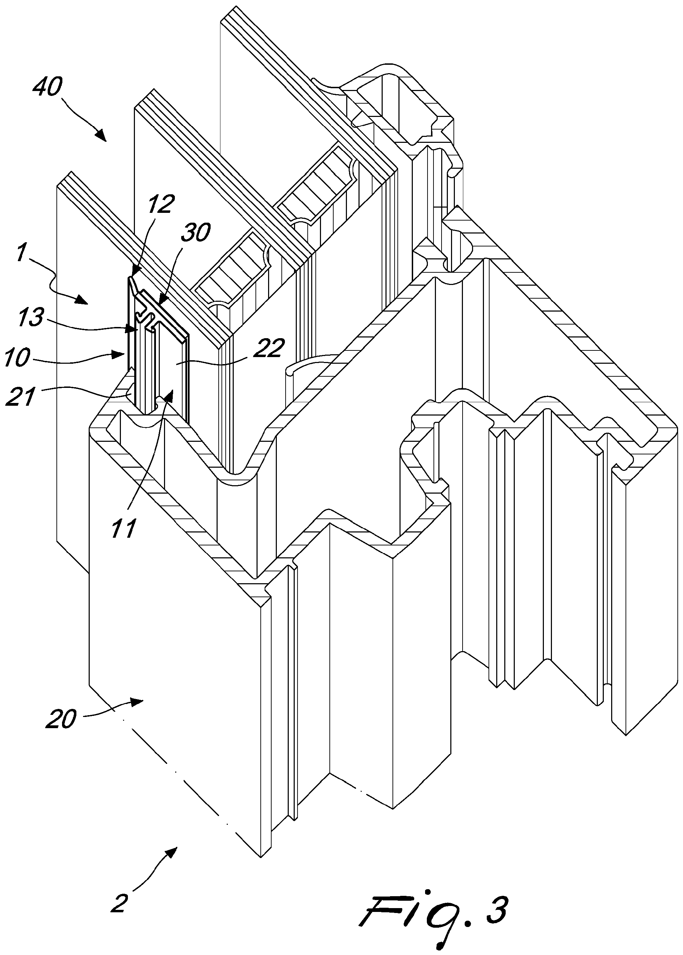

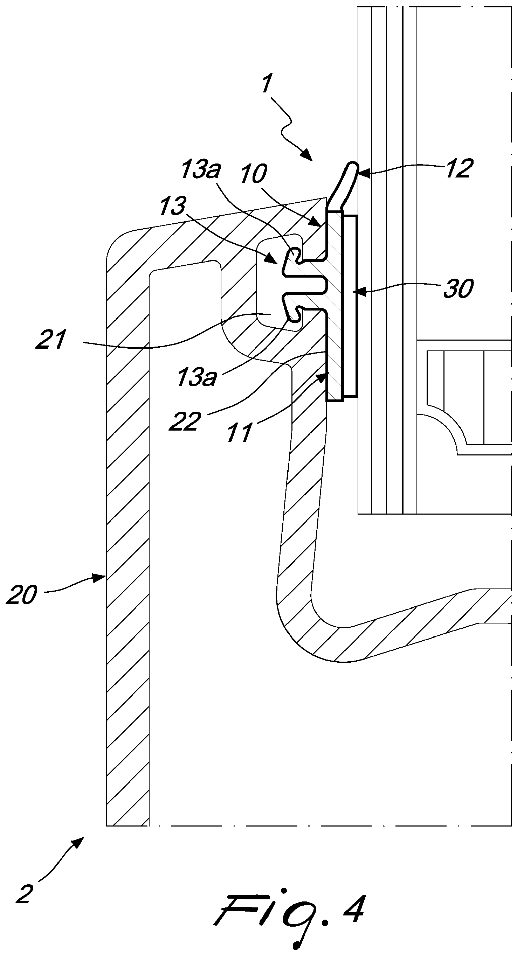

With reference to Figures 3 and 4, the coupling portion 13 is configured to engage with a respective seat 21 defined on a profiled element 20, and in particular on a profiled element 21 of a door or window frame 2.

Such door or window frame 2 can be made of PVC, of aluminum, but also of different materials such as for example wood.

However, the gasket can also be used associated with profiled elements 20 used in different contexts, for example as supporting structures for planar elements in general, such as sheets for providing facades, for example continuous or opaque glass facades of buildings, or sheets used in interior furnishing, such as for example shower cubicles. The substantially planar abutment portion 22 is arranged, during use, on a plane substantially parallel to the plane of arrangement of the planar element which, in the case of a door or window frame 2, is constituted by glazing 40.

According to a preferred embodiment, the coupling portion 13 comprises two wings 13a which are mutually opposite and elastically deformable with respect to an axis which is parallel to the longitudinal direction of extension of the gasket 1.

According to a further aspect, the present invention relates to a gasket, generally designated by the reference numeral 1, for door or window frames 2.

The gasket 1 comprises a longitudinally extended profiled element 10 with a longitudinally extended first portion 11 made of a first material and a longitudinally extended second portion 12 which is stably connected to the longitudinally extended first portion 11 and is made of a second material.

The first portion 11 defines a mating portion 13 and a substantially planar abutment portion 22.

The first material has a first hardness and the second material has a second hardness which is lower than the first hardness of the first material.

The planar abutment portion 22 is stably associated with a double-sided adhesive sheet-like element 30, which has a first adhesive face 30a directed toward the planar abutment portion 22, and a second adhesive face 23 covered with a removable film 24 arranged on the opposite side with respect to the planar abutment portion 22.

In particular, the first material has a Shore A hardness higher than 75, while the second material has a Shore A hardness lower than 70.

Obviously, according to the applications and to requirements, materials can be used with a different hardness from those specified.

The coupling portion 13 is configured to engage with a respective seat 21 defined on a profiled element 20 of a door or window frame 2.

Such door or window frame 2 can be made of PVC, of aluminum, but also of different materials such as for example wood.

However, the gasket 1 can also be used associated with profiled elements 20 used in different contexts, for example as supporting structures for planar elements in general, such as sheets for providing facades, or sheets used in interior furnishing, such as for example shower cubicles.

The substantially planar abutment portion 22 is arranged, during use, on a plane substantially parallel to the plane of arrangement of the planar elements, for example of the glazing 40 of the door or window frame 2.

The second portion 12 has a lip configuration in order to press, during use, against a respective outer surface of the planar element, for example of the glazing 40.

Advantageously, the gasket 1 according to the invention is associated, during use, with the profiled element 20 so as to be arranged at the face of the glazing 40 that is directed outward from the building.

Conveniently, the coupling portion 13 comprises two wings 13a which are mutually opposite and elastically deformable with respect to an axis which is parallel to the longitudinal direction of extension of the gasket 1.

Obviously, the shape structure of the mating portion 13 can be varied.

The use of the gasket 1, according to the invention, is substantially similar to the use of a traditional gasket.

The gasket 1 according to the invention, in addition to performing the function of a classic gasket, makes it possible to seal the glazing in door or window frames preferably made of PVC and aluminum, but also of wood.

The gasket 1 comprises a soft wing, defined by the second portion 12, and a semi-rigid part pre-glued to the double-sided adhesive tape, which is constituted by the first portion associated with the double-sided adhesive sheet-like element.

This double-sided adhesive sheet-like element is a product for gluing the glazing to the leaf of the window with a structural function.

The double-sided adhesive sheet-like element, with high mechanical performance, ensures a structural adhesive bonding and confers rigidity on the system to which it is applied (for example to the door or window frame 2). In addition to the mechanical seal of the double-sided adhesive tape, the product ensures sealing against atmospheric agents (in a door or window frame and on external facades) and for example sealing against water (in shower cubicles).

As a consequence, the gasket according to the invention ensures the sealing of glazing with a structural function that contributes to the rigidity of the finished door or window frame, so ensuring at the same time an excellent seal against atmospheric agents, excellent acoustic performance of the door or window frame, and a pleasing appearance.

In practice it has been found that the invention fully achieves the intended aim and objects by providing a method for manufacturing a gasket which is characterized by the following characteristics:
- simplicity of application of the gasket to door leaf profiles made of PVC, of aluminum or of wood;
- seal against atmospheric agents and excellent acoustic performance by virtue of the soft part of the gasket;
- adhesive bonding of the glazing with a structural function (by virtue of the semi-rigid part of the gasket and the double-sided adhesive sheet-like element;
- consequent stiffening of the finished door leaf;
- consequent possibility to remove the metal reinforcement normally present in profiles for door or window frames made of PVC.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102023000003858 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A method for manufacturing gaskets (1), **characterized in that** it comprises a step of coextrusion of a first material and of a second material in order to obtain a longitudinally extended profiled element (10) with a longitudinally extended first portion (11) made of said first material and a longitudinally extended second portion (12) stably connected to said longitudinally extended first portion (11) and made of said second material, said first portion defining a mating portion (13) and a substantially planar abutment portion (22), said first material having a first hardness and said second material having a second hardness which is lower than said first hardness, and a step of mating said planar abutment portion (22) with a double-sided adhesive sheet-like element (30) having a first adhesive face (30a) designed to face said planar abutment portion (22) and a second adhesive face (23) covered with a removable film (24) arranged on the opposite side with respect to said planar abutment portion (22).

2. The method according to claim 1, **characterized in that** said first material has a Shore A hardness higher than 75 and said second material has a Shore A hardness lower than 70.

3. The method according to claim 1, **characterized in that** said mating portion (13) is configured to engage with a respective seat (21) defined on a profiled element (20) and **in that** said substantially planar abutment portion (22) is arranged, during use, on a plane that is substantially parallel to the plane of arrangement of a planar element.

4. The method according to claim 3, **characterized in that** said profiled element (20) comprises a profiled element (20) of a door or window frame (2) and **in that** said planar element comprises the glazing (40) of said door or window frame (2).

5. The method according to claim 1, **characterized in that** said mating portion (13) comprises two wings (13a) which are mutually opposite and elastically deformable with respect to an axis which is parallel to the longitudinal direction of extension of said gasket (1).

6. A gasket (1), **characterized in that** it comprises a longitudinally extended profiled element (10) provided with a longitudinally extended first portion (11) made of a first material and a longitudinally extended second portion (12) which is stably connected to said longitudinally extended first portion (11) and is made of a second material, said first portion defining a mating portion (13) and a substantially planar abutment portion (22), said first material having a first hardness and said second material having a second hardness which is lower than said first hardness, said planar abutment portion (22) being stably associated with a double-sided adhesive sheet-like element (30) having a first adhesive face (30a) which faces said planar abutment portion (22) and a second adhesive face (23) covered with a removable film (24) arranged on the opposite side with respect to said planar abutment portion (22).

7. The gasket (1) according to claim 6, **characterized in that** said first material has a Shore A hardness higher than 75 and said second material has a Shore A hardness lower than 70.

8. The gasket (1) according to claim 6, **characterized in that** said mating portion (13) is configured to engage with a respective seat (21) defined on a profiled element (20) of a door or window frame (2) and **in that** said substantially planar abutment portion (22) is arranged, during use, on a plane that is substantially parallel to the plane of arrangement of the glazing (30) of said door or window frame (2).

9. The gasket (1) according to one or more of claims 6 to 8, **characterized in that** said mating portion (13) comprises two wings (13a) which are mutually opposite and elastically deformable with respect to an axis which is parallel to the longitudinal direction of extension of said gasket.
